# EUROPEAN PATENT APPLICATION

(11) **EP 3 029 584 A1**
(43) Date of publication of application: **08.06.2016**
(21) Application number: 15191335.7
(22) Date of filing: 23.10.2015
(51) Int. Cl.: G06F 17/30

(54) **CONTENT PROVIDING SYSTEM AND CONTENT PROVIDING METHOD THEREOF**

(30) Priority: 04.12.2014 KR 20140173396
(71) Applicant: Samsung Electronics Co., Ltd., Gyeonggi-do 16677 (KR)
(72) Inventor: PARK, Hee-dong, Seoul (KR); KIM, Moon-su, Gyeonggi-do (KR); PARK, Seong-ho, Gyeonggi-do (KR); CHOI, Jong-il, Seoul (KR); HWANG, Yun-sung, Seoul (KR)
(74) Representative: Walaski, Jan Filip

(57) **Abstract**

A content providing system and a content providing method thereof is provided. A content providing system includes a web server configured to receive a query for requesting providing content from a user terminal and transmit content corresponding to the query to the user terminal, a storage server configured to store content data received from an external content provider, and a management server configured to transmit the query to the content provider when the content data corresponding to the query is not stored in the storage server and receive the content data corresponding to the query from the content provider to store the received content data in the storage server.

## Description

The present invention relates to a content providing system and a content providing method thereof, and more particularly, to a content providing system and a content providing method thereof capable of easily providing content requested by a user to a user terminal.

Recently, user terminals which are usable by users have been diversified. Further, various user terminals have been evolved as smart devices which do not perform only predetermined functions, but provide various functions for user convenience.

For example, recently, a TV not only simply displays content received through broadcast channels but also may provide various content according to a user request when the user actively requests the content.

As a result, an apparatus, a system, a server, and the like for easily providing the content requested by the user have been developed. However, due to massive types and amounts of content, there are problems in that a mass storage device for storing various content is required and it is difficult to detect the content requested by the user.

Accordingly, when the user requests the content, a need for a method and a server for easily detecting the content requested by the user to rapidly transmit the content to the user terminal arose.

Exemplary embodiments of the present disclosure overcome the above disadvantages and other disadvantages not described above. Also, the present disclosure is not required to overcome the disadvantages described above, and an exemplary embodiment of the present disclosure may not overcome any of the problems described above.

The present disclosure provides a content providing system and a content providing method thereof capable of rapidly and accurately providing content requested by a user.

According to an aspect of the present disclosure, a content providing system includes a web server configured to receive a query for requesting providing content from a user terminal and transmit content corresponding to the query to the user terminal, a storage server configured to store content data received from an external content provider, and a management server configured to transmit the query to the content provider when the content data corresponding to the query is not stored in the storage server and receive the content data corresponding to the query from the content provider to transmit the received content data to the storage server.

The storage server may include a volatile main memory cache and a non-volatile sub memory cache, and the management server may store the content data corresponding to the query received from the content provider in the main memory cache.

The management server may determine whether the content data corresponding to the query is normal data and store the content data corresponding to the query in the sub memory cache when the content data corresponding to the query is the normal data.

The main memory cache may delete the content data received from the content provider according to a predetermined period.

The web server may determine whether stored content data is normal data when the content data corresponding to the query is stored in the main memory cache, transmit the stored content to the user terminal when the stored content data is the normal data, and transmit the stored content data corresponding to the query among the data stored in the sub memory cache to the user terminal when the stored content data is abnormal data.

The management server may parse received content data to store the parsed content data in the main memory cache, when the content data corresponding to the query is received from the content provider.

The web server may transmit the content data stored in the main memory cache to the user terminal through an open application programming interface (API).

According to another aspect of the present disclosure, a content providing method includes receiving a query for requesting providing content from a user terminal, determining whether content data corresponding to the query is stored in a storage server, transmitting the query to the content provider when the content data corresponding to the query is not stored in the storage server to receive the content data corresponding to the query from the content provider, and transmitting the received content data to the user terminal.

The storage server may include a volatile main memory cache and a non-volatile sub memory cache, and the content providing method may further include storing the content data corresponding to the query received from the content provider in the main memory cache.

The storing may include determining whether the content data corresponding to the query is normal data and storing the content data corresponding to the query in the sub memory cache when the content data corresponding to the query is normal data.

The content providing method may further include deleting the content data received from the content provider according to a predetermined period to be stored in the main memory cache.

The transmitting may include determining whether stored content data is normal data when the content data corresponding to the query is stored in the main memory cache, and transmitting the stored content to the user terminal when the stored content data is the normal data and transmitting the stored content data corresponding to the query among the data stored in the sub memory cache to the user terminal when the stored content data is abnormal data.

In the storing, received content data may be parsed and the parsed content data may be stored in the main memory cache, when the content data corresponding to the query are received from the content provider.

In the transmitting, the content data stored in the main memory cache may be transmitted to the user terminal through an open API.

According to the exemplary embodiments of the present disclosure, the user which requests the content through the user terminal may rapidly and accurately receive the requested content.

According to another aspect of the present disclosure, a storage server to store content may include a main memory cache including a volatile memory, a sub-memory cache including a non-volatile memory, a communication module configured to receive a query to provide content and a processor to determine whether content data corresponding to the received query is stored in the main memory cache and to transmit the content data from the main memory cache in response to the received query when the content data is determined as being stored in the main memory cache and otherwise to control the communication module to transmit the received query to an external device.

According to another aspect of the present disclosure, a method of storing content in a storage server having a main memory cache and a sub-memory cache is described. The method may include receiving a query to provide content, determining whether content data corresponding to the received query is stored in the main memory cache, and transmitting the content data from the main memory cache in response to the received query when the content data is determined as being stored in the main memory cache and otherwise transmitting the received query to an external device.

Additional and/or other aspects and advantages of the disclosure will be set forth in part in the description which follows and, in part, will be obvious from the description, or may be learned by practice of the disclosure.

The above and/or other aspects of the present disclosure will be more apparent by describing certain exemplary embodiments of the present disclosure with reference to the accompanying drawings, in which:
FIG. 1 is a diagram illustrating a user terminal, a content providing system, and a plurality of content providers according to an exemplary embodiment of the present disclosure;
FIG. 2 is a block diagram schematically illustrating a configuration of the content providing system according to the exemplary embodiment of the present disclosure;
FIG. 3 is a block diagram illustrating a configuration of the content providing system according to the exemplary embodiment of the present disclosure in detail;
FIG. 4 is a block diagram illustrating a configuration of a storage server according to the exemplary embodiment of the present disclosure;
FIG. 5 is a block diagram illustrating a configuration of a management server according to the exemplary embodiment of the present disclosure;
FIG. 6 is a flowchart illustrating a method of providing the content requested by the user according to another exemplary embodiment of the present disclosure;
FIG. 7 is a flowchart for describing a method of receiving, storing, and transmitting content data by a storage server in detail; and
FIG. 8 is a sequence diagram illustrating a method of requesting, storing, and transmitting the content data according to yet another exemplary embodiment of the present disclosure.

The exemplary embodiments of the present disclosure may be diversely modified. Accordingly, specific exemplary embodiments are illustrated in the drawings and are described in detail in the detailed description. The matters defined in the description, such as detailed construction and elements, are provided to assist in a comprehensive understanding of the disclosure. Thus, it is apparent that the exemplary embodiments of the present disclosure can be carried out without those specifically defined matters. Also, well-known functions or constructions are not described in detail since they would obscure the disclosure with unnecessary detail.

The terms "first", "second",...... etc. may be used to describe diverse components, but the components are not limited by the terms. The terms are only used to distinguish one component from the others.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

The exemplary embodiments of the present disclosure will now be described in greater detail with reference to the accompanying drawings. In the following description, same drawing reference numerals are used for the same elements even in different drawings. Thus, description of the same elements is not repeated.

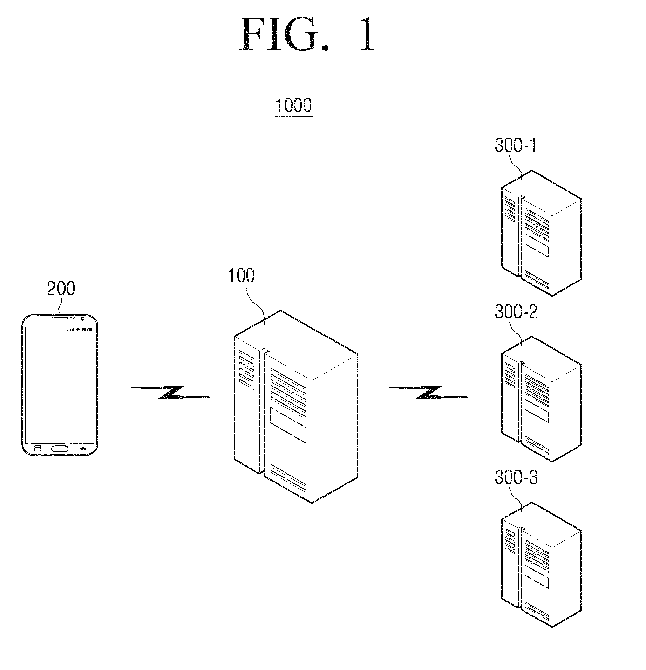

FIG. 1 is a diagram illustrating a content providing system 100, a user terminal 200, and a plurality of content providers 300-1 to 300-3 according to an exemplary embodiment of the present disclosure.

A content providing system 100 is a system for providing the content to the user terminal 200, when a request for providing the content is received from the user terminal 200. That is, when a query requesting predetermined content is received from the user terminal 200, the content providing system 100 may receive the content corresponding to the query from the content provider to transmit the received content to the user terminal 200.

Meanwhile, FIG. 1 illustrates the content providing system 100 as one server, but the content providing system 100 may include a plurality of servers. That is, the content providing system 100 may include a web server for receiving a query requesting the content from the user terminal 200 and providing the content corresponding to the query, a storage server for storing the content corresponding to the query, and a management server for receiving the content from the content provider and parsing the received content to acquire the content corresponding to the query. A configuration and a detailed role of each server will be described below.

FIG. 1 illustrates that the user terminal 200 is implemented by a smart phone, but the user terminal 200 may be implemented by various electronic devices capable of receiving the request for providing the content from the user to request the content to the content providing system 100 and receiving the content from the content providing system 100 to provide the received content to the user. For example, the user terminal 200 may be implemented by various electronic devices such as a mobile phone, a tablet PC, a digital camera, a camcorder, a notebook PC, a desktop, a PDA, an MP3, smart glasses, a smart watch, or a smart ring.

Meanwhile, the plurality of content providers 300-1 to 300-3 may be external content providers providing various content, respectively. FIG. 1 illustrates that three content providers 300-1 to 300-3 exist, but it is just one exemplary embodiment, and the number of content providers may be smaller or larger than three.

Particularly, each of the content providers 300-1 to 300-3 may provide the content through an open application programming interface (API). The open API is a set of opened APIs providing an environment in which specific companies provide free functions which are available on the web and the user acquires and assembles the functions in a user's program to create another program.

Accordingly, the content providing system 100 may provide the content corresponding to a query requested by the user terminal 200 by using the content provided through the open API by each of the content providers 300-1 to 300-3. That is, since the open API is used, the content providing system 100 may receive various content from various content providers providing the open API without restrictions.

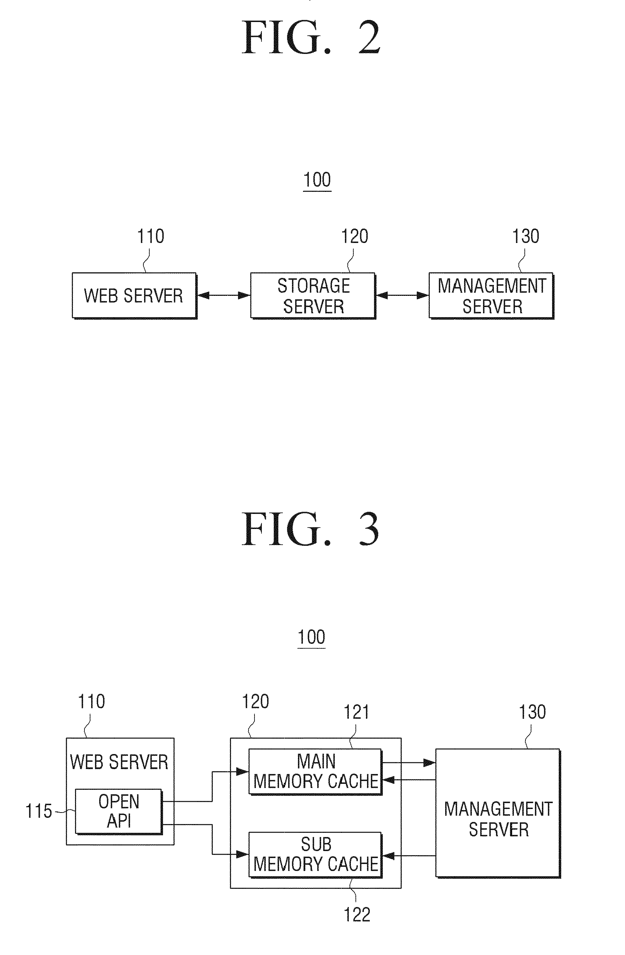

Hereinafter, a configuration of the content providing system 100 will be described in detail with reference to FIG. 2. As illustrated in FIG. 2, the content providing system 100 may include a web server 110, a storage server 120, and a management server 130.

The web server 110 may receive the query requesting the content from the user terminal 200. In addition, the web server 110 may transmit the content corresponding to the received query to the user terminal 200.

The web server 110 receiving the query may request content data corresponding to the query received from the user terminal 200 to the storage server 120. When the content data corresponding to the query received from the user terminal 200 is stored in the storage server 120, the web server 110 receives the content data corresponding to the query received from the user terminal 200 from the storage server 120 to transmit the received content data to the user terminal 200. Particularly, the web server 110 may transmit the content data to the user terminal 200 through the open API.

Meanwhile, the storage server 120 may store the content data received from the external content provider. That is, when the query requesting the content data is received from the web server 110, the storage server 120 may transmit the content data corresponding to the query stored in the storage server 120 to the web server 110.

The management server 130 may receive the content data from the content provider to transmit the received content data to the storage server 120. Particularly, the management server 130 may receive the content data from various content providers supplying the content data through open API. In addition, the management server 130 may parse the received content data to transmit the analyzed content data to the storage server 120.

Hereinafter, a configuration of the content providing system 100 will be described in detail with reference to FIG. 3. The web server 110, the storage server 120, and the management server 130 illustrated in FIG. 3 may be separated individual servers. However, the servers are just one exemplary embodiment, and the servers may be implemented by various forms including in a form in which any server is included in another server or one server includes respective servers as internal servers to integrally manage the plurality of servers, and the like.

The web server 110 is a network server which receives the query requesting the content from the user terminal 200 and transmits the content corresponding to the query to the user terminal 200.

The web server 110 receiving the query may transmit the received query to the storage server 120. When the content data corresponding to the query received from the user terminal 200 is stored in the storage server 120 receiving the query, the web server 110 may receive the content data corresponding to the query from the storage server 120 and transmit the received content data to the user terminal 200.

Particularly, the web server 110 may transmit the content data to the user terminal 200 through open API. In detail, the web server 110 may include an open API module. Accordingly, the open API module may receive the content data from the storage server 120 and transmit the received content data to the user terminal 200 through a network.

Meanwhile, the storage server 120 may store various content data received from the external content provider. That is, when the query requesting the content data is received from the web server 110, the storage server 120 may transmit to the web server 110 the content data corresponding to the query among the content data stored in the storage server 120.

The storage server 120 may include a main memory cache 121 and a sub memory cache 122. Particularly, the main memory cache 121 may be implemented by a volatile memory. Accordingly, in order to maintain recency of the data, the storage server 120 may delete the content data stored in the main memory cache 121 according to a predetermined period, that is, at predetermined intervals. On the contrary, the sub memory cache 122 may be implemented by a non-volatile memory.

The main memory cache 121 is an element for storing the content data received from the management server 130 as described below. Even though it is determined that the content data is abnormal in the management server 130, all of the content data received from the management server 130 may be stored in the main memory cache 121.

Meanwhile, the sub memory cache 122 is an element for storing only the content data which is determined to be normal in the management server 130. Accordingly, when the query is received through the web server 110, if it is determined that the latest content data stored in the main memory cache 121 is abnormal, the content data stored in the sub memory cache 122 may be transmitted to the web server 110. That is, the normal content data which is last stored in the sub memory cache 122 may be transmitted to the web server 110.

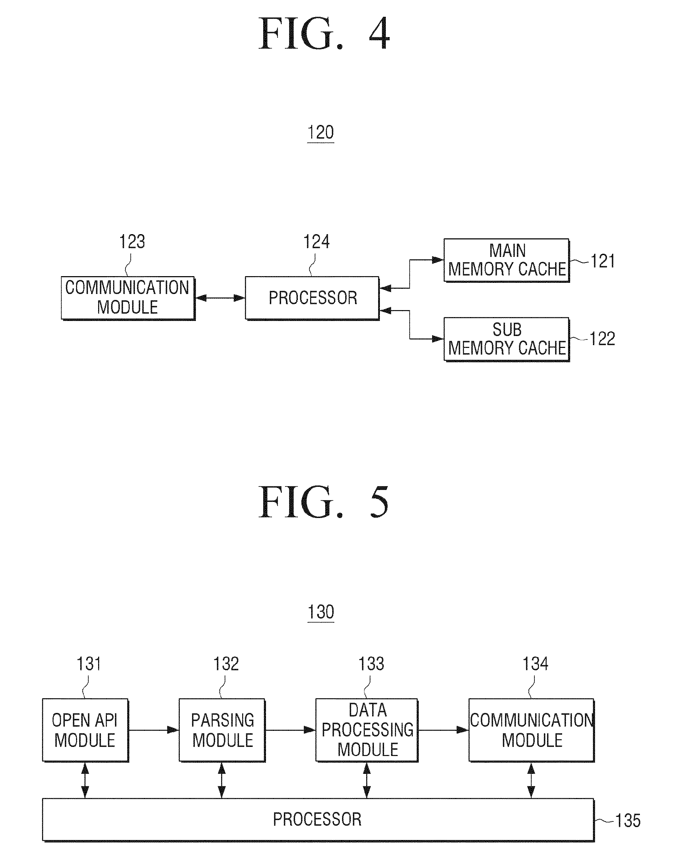

The storage server 120 may further include a communication module 123 and a processor 124 in addition to the main memory cache 121 and the sub memory cache 122 described above, as illustrated in FIG. 4.

In detail, the communication module 123 is an element for performing communication with the web server 110 and the management server 130. That is, the storage server 120 may receive the query requesting the content provision from the web server 110 through the communication module 123. In addition, the storage server 120 may transmit the query to the management server 130 through the communication module 123 and may receive the content data corresponding to the query through the communication module 123.

When the content data corresponding to the query is stored in the storage server 120 or the content data is received from the management server 130, the storage server 120 may provide the content data to the web server 110 through the communication module 123

The processor 124 is an element for generally controlling the storage server 120. The term processor 124 may be used to refer to any of a central processing unit, a microprocessor, a controller, and the like. Further, the processor 130 may be implemented by a system-on-a-chip or a system on chip (SOC or SoC) together with other functional units such as the communication module 123.

When receiving the query requesting the content data from the web server 110 through the communication module 123, the processor 124 may verify whether the content data corresponding to the query is stored in the main memory cache 121. According to the verified result, when the content data corresponding to the query is stored in the main memory cache 121, the processor 124 may control the communication module 123 so as to transmit the content data corresponding to the query to the web server 110.

Further, the processor 124 may determine whether the content data corresponding to the query which is stored in the main memory cache 121 is normal data. According to the determined result, when the content data stored in the main memory cache 121 is the normal data, the processor 124 may control the communication module 123 so as to transmit the stored content data to the web server 110.

When the content data stored in the main memory cache 121 is the abnormal data, the processor 124 may control the communication module 123 to transmit to the web server 110 the stored content data corresponding to the query among the data stored in the sub memory cache 122.

Particularly, when the sub memory cache 122 is implemented by the non-volatile memory and the plurality of content data corresponding to the query is stored, the processor 124 may control the communication module 123 so as to transmit to the web server 110 the content data last stored in the sub memory cache 122 among the plurality of content data corresponding to the query.

Meanwhile, referring back to FIG. 3, the management server 130 is a server for receiving the content data from the content provider to store the received content data in the storage server 120. Particularly, the management server 130 may receive the content data from various content providers supplying the content data through the open API. In addition, the management server 130 may parse the received content data to transmit the analyzed content data to the storage server 120.

A detailed configuration of the management server 130 is as illustrated in FIG. 5. That is, the management server 130 may include an open API module 131, a parsing module 132, a data processing module 133, a communication module 134, and a processor 135.

The open API module 131 is an element for receiving the content data from the external content provider. That is, the management server 130 may receive the content data from the content provider providing various content through the open API module 131.

When the content data corresponding to the query is received through the open API module 131, the parsing module 132 may parse the received content data. That is, the parsing module 132 may parse the received content data to extract the content data suitable for providing. In addition, the parsing module 132 may transmit the extracted content data to the data processing module 133.

The data processing module 133 is a constituent element for processing the content data extracted through the parsing module 132 in a predetermined format.

In detail, since the management server 130 receives the content data from various content providers, the received content data may include unnecessary information such as HTML tags, comments, or strings, in addition to the content data corresponding to the query. Accordingly, the data processing module 133 may extract only the content data corresponding to the query from the parsed content data to store the extracted content data in the storage server 120 and process the stored content data in a format suitable to be transmitted to the user terminal 200.

The communication module 134 is an element for performing communication with an external server such as the storage server 120, and the processor 135 is an element for generally controlling the storage server 120.

Accordingly, the communication module 134 may transmit the content data processed through the data processing module 133 to the main memory cache 121 of the storage server 120, by the control of the processor 135.

Meanwhile, the processor 135 may determine whether the content data received from the content provider is normal data. As the determined result, when the content data corresponding to the query is normal data, the processor 135 may transmit the content data corresponding to the query to the storage server 120 to be stored in the sub memory cache 122 of the storage server 120.

That is, since the content is received from the content provider through the open API module 131, the processor 135 verifies the specification of the received content data to verify whether the received content data is normal.

Accordingly, when it is determined that the content data is normal data, the processor 135 may control the communication module 134 to simultaneously transmit the content data to the main memory cache 121 and the sub memory cache 122.

Alternatively, the processor 135 may control the communication module 134 to tag information representing whether the content data is normal to transmit the tagged information to the storage server 120. In this case, when the received content data is normal according to the tagged information, the storage server 120 may store the received content data in the main memory cache 121 and the sub memory cache 122. Further, when the received content data is abnormal, the storage server 120 may store the content data only in the main memory cache 121.

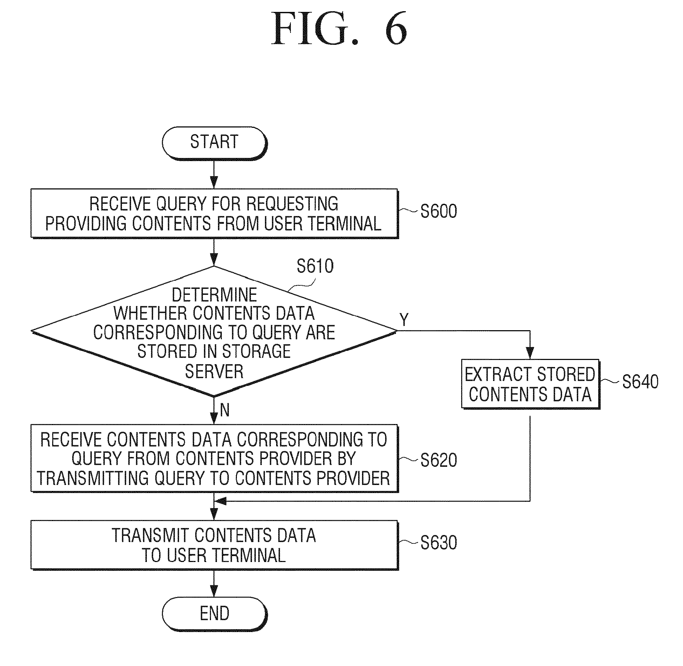

Meanwhile, FIG. 6 is a flowchart illustrating a method of providing the content requested by the user in the content providing system 100 according to the exemplary embodiment of the present disclosure.

First, the storage server 120 receives a query for requesting providing the content from the user terminal 200 through the web server 110 (S600). That is, the web server 110 may receive the query for requesting providing the content from the user terminal 200 through the open API.

In addition, the web server 110 may transmit the received query to the storage server 120. Accordingly, the storage server 120 receiving the query may determine whether the content data corresponding to the received query is stored (S610). Particularly, the storage server 120 may include a non-volatile main memory cache 121. That is, the storage server 120 receiving the query may determine whether the content data corresponding to the query is stored in the main memory cache 121.

As the determined result, when the content data corresponding to the query is not stored (S610-N), the storage server 120 may transmit the query requesting the content data to the management server 130. The management server 130 receiving the query transmits the query to an external content provider to receive the content data corresponding to the query from the content provider (S620).

That is, the management server 130 may receive the content data from various content providers supplying the content data through open API. In addition, the management server 130 may parse the received content data to transmit the analyzed content data to the storage server 120. Since the management server 130 may receive the content data from various content providers, the received content data may include unnecessary information such as HTML tags, comments, or strings, in addition to the content data corresponding to the query. Accordingly, the management server 130 may extract only the content data corresponding to the query by parsing the received content data and removing the unnecessary information.

The storage server 120 receiving the content data corresponding to the query from the management server 130 may store the received content data in the main memory cache 121. The storage server 120 may transmit the received content data to the web server 110. In addition, the web server 110 receiving the content data from the storage server 120 transmits the received content data to the user terminal (S630).

Meanwhile, when the content data corresponding to the received query is pre-stored in the main memory cache 121 (S610-Y), the storage server 120 extracts the stored content data (S640) to transmit the extracted content data to the web server 110.

That is, when the content data corresponding to the query is pre-stored in the storage server 120, the storage server 120 may transmit the content data stored in the main memory cache 121 to the web server 110. In addition, the web server 110 transmits the received content data to the user terminal (S630).

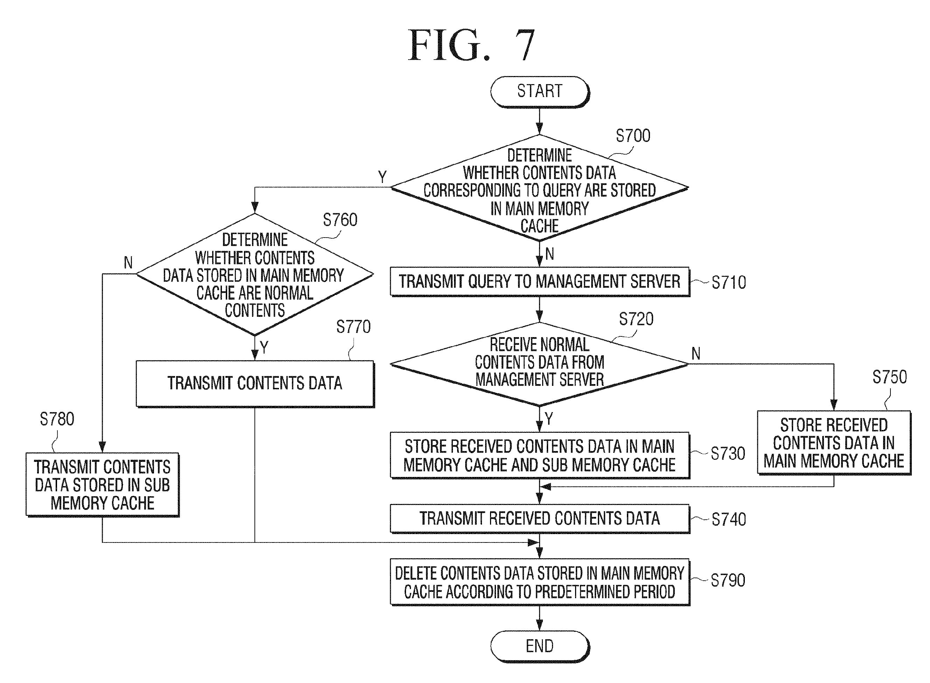

Meanwhile, FIG. 7 is a flowchart for describing a method of receiving, storing, and transmitting content data by the storage server 120 in detail.

When the query for requesting providing the content is received from the web server 110, e.g., via the communication module 123, the storage server 120 determines whether the content data corresponding to the query is stored in the main memory cache (S700). That is, the storage server 120 may determine whether the content data corresponding to the query is stored in the main memory cache which is a volatile memory in response to the request for providing the content.

When the content data corresponding to the query is not stored in the main memory cache 121, the storage server 120 transmits the query to the management server 130 (S710). That is, since the storage server 120 deletes the data stored in the main memory cache 121 at predetermined time intervals, when the query requesting the content data is received, the content data may not be stored in the main memory cache 121. Accordingly, the storage server 120 may request the content data by transmitting the query to the management server 130.

Meanwhile, the management server 130 collects the content data corresponding to the query from the content provider to determine whether the content data is the normal content. Accordingly, the management server 130 may tag whether the content data is the normal content in the collected content data to transmit the tagged content data to the storage server 120.

Accordingly, when the normal content data is received from the management server 130 (S720-Y), the storage server 120 stores the received content data in the main memory cache and the sub memory cache (S730). That is, when the received content data is the normal content data, the storage server 120 may store the content data in both of the main memory cache which is the volatile memory and the sub memory cache which is the non-volatile memory.

Meanwhile, when the abnormal content data is received from the management server 130 (S720-N), the storage server 120 stores the received content data in the main memory cache (S750). That is, when information of the abnormal data is tagged in the content data, the storage server 120 may store the received content data only in the main memory cache which is the volatile memory. Meanwhile, tagging whether the content data received from the management server 130 is normal is just one exemplary embodiment, and by various methods such as determining a position to be stored with the content data by control of the management server 130, the storage server 120 may store the abnormal content data only in the main memory cache.

In step S730 or step S750, when the content data corresponding to the query is stored in the main memory cache, the storage server 120 transmits the received content data (S740). That is, the storage server 120 may transmit the received content data to the web server 110. In this case, the web server 110 may transmit the received content data to the user terminal 200 through the open API.

Meanwhile, when the query is received, in the case where the content data corresponding to the query is stored in the main memory cache (S700-Y), the storage server 120 determines whether the content data stored in the main memory cache is the normal content data (S760).

In the case where the content data stored in the main memory cache is the normal content data (S760-Y), the storage server 120 transmits the content data (S770). That is, since the normal content data corresponding to the query is pre-stored in the main memory cache, the storage server 120 extracts the content data to transmit the extracted content data to the web server 110.

Meanwhile, in the case where the content data stored in the main memory cache is not the normal content data (S760-N), the storage server 120 transmits the content data stored in the sub memory cache (S780). Accordingly, even in the case where the content data is not smoothly received from the content provider or the received and stored data is abnormal, the storage server 120 may transmit the normal content data by using the sub memory cache 122.

In addition, the storage server 120 deletes the content data stored in the main memory cache according to a predetermined period (S790). That is, when a predetermined time has elapsed, the storage server 120 deletes the content data stored in the main memory cache to maintain recency of the content stored in the main memory cache.

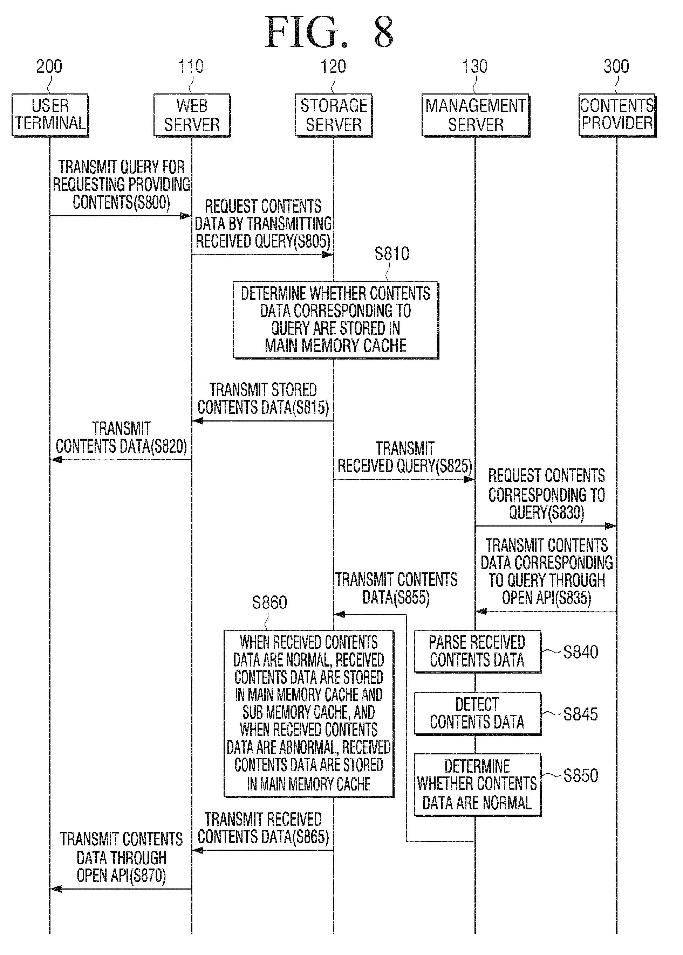

Meanwhile, FIG. 8 is a sequence diagram illustrating a method of requesting, storing, and transmitting the content data according to yet another exemplary embodiment of the present disclosure.

First, when there is the request from the user or it is appropriate to provide the content to the user, the user terminal 200 transmits the query for requesting providing the content to the web server 110 (S800). The web server 110 may mean a network capable of performing HTTP communication with the user terminal 200.

The web server 110 requests the content data by transmitting the received query to the storage server 120. The storage server 120 determines whether the content data corresponding to the query is stored in the main memory cache (S810). The storage server 120 deletes the data stored in the main memory cache according to the predetermined period. Accordingly, when the content data corresponding to the query is stored in the main memory cache, since the recency of the content data is guaranteed, the storing server 120 transmits the stored content data to the web server 110 (S815).

In detail, the storage server 120 determines whether the content data stored in the main memory cache 121 is normal to transmit the content data stored in the main memory cache to the web server 110 in the case of the normal content data. Meanwhile, in the case of the abnormal data, the storage server 120 may transmit the stored content data corresponding to the query among the data stored in the sub memory cache to the web server 110.

The web server 110 receiving the content data from the storage server 120 transmits the content data to the user terminal 200 through the open API (S820).

Meanwhile, when the content data corresponding to the query is not stored in the main memory cache, the storage server 120 transmits the received query to the management server 130 (S825). The management server 130 requests the content corresponding to the query to the external content provider 300 (S830). Particularly, the management server 130 may request the content to at least one content provider which supplies the content data through the open API.

Accordingly, the management server 130 receives the content data corresponding to the query from the content provider 300 through the open API (S835), and parses the received content data (S840). The management server 130 detects only the content data corresponding to the query from the parsed content data (S845). That is, the content data received from the content provider 300 may include unnecessary information such as separate comments or tags. Accordingly, the management server 130 may extract only the content data corresponding to the query by parsing the received content data.

Meanwhile, the management server 130 may determine whether the content data is normal (S850). Accordingly, while the management server 130 transmits the content data to the storage server 120 (S855), the management server 130 may transmit the content data by tagging whether the content data is normal or transmit the content data by designating a storage position according to whether the content data is transmitted.

The storage server 120 may vary the storage position according to whether the received content data is normal. In detail, when the received content data is normal, the storage server 120 stores the received content data in the main memory cache and the sub memory cache, and when the received content data is abnormal, the storage server 120 stores the received content data in the main memory cache (S860).

That is, in preparation for the case where the content is not smoothly transmitted from the content provider or when abnormal content data is received, the storage server 120 may store the normal content data in the sub memory cache in addition to the main memory cache.

In addition, the storage server 120 transmits the received content data to the web server 110 (S865), and the web server 110 transmits the content data to the user terminal 200 through the open API (S870).

By the content providing method described above, the user may stably receive the last content with respect to the content to be used.

Meanwhile, the elements of the aforementioned respective servers may be implemented with software. For example, each server included in the content providing system may further include a flash memory or other non-volatile memories. In the non-volatile memory, programs corresponding to the constituent elements of each server may be stored.

Further, the processor of each server may be implemented in a form including a CPU and a random access memory (RAM). The CPU of the processor may perform a function of each server described above by copying the aforementioned programs stored in the non-volatile memory to the RAM and then executing the copied programs.

The processor is a configuration serving to generally control the apparatus. The processor may be mixedly used as the same meaning as a central processing unit, a microprocessor, a controller, and the like. Further, the processor of each server may be implemented by a system-on-a-chip or a system on chip (SOC or SoC) together with other functional units such as the communication module included in each server.

Meanwhile, the content providing method of the content providing system according to various exemplary embodiments described above may be coded with software to be stored in a non-transitory readable medium. Such a non-transitory readable medium may be installed and used in various devices.

The non-transitory readable medium means a medium which semi-permanently stores the data and is readable by the apparatus, not a medium which stores the data for a short time, such as a register, a cache, and a memory. In detail, the non-transitory readable medium may include a CD, a DVD, a hard disk, a Blu-ray disk, a USB, a memory card, a ROM, and the like.

While the exemplary embodiments of the present invention have been illustrated and described above, the invention is not limited to the aforementioned specific exemplary embodiments, and various modifications may be made by a person with ordinary skill in the art to which the present disclosure pertains without departing from the scope of the invention as defined by the claims.

## Claims

1. A content providing system comprising:
a web server configured to receive a query for requesting providing content from a user terminal and to transmit content corresponding to the query to the user terminal;
a storage server configured to store content data received from an external content provider; and
a management server configured to transmit the query to the external content provider when the content data corresponding to the query is not stored in the storage server, to receive the content data corresponding to the query from the external content provider, and to transmit the received content data to the storage server.

2. The content providing system as claimed in 1, wherein the storage server includes a volatile main memory cache and a non-volatile sub memory cache, and the management server is configured to store the content data corresponding to the query received from the external content provider in the volatile main memory cache.

3. The content providing system as claimed in claim 1 or 2, wherein the management server is configured to determine whether the content data corresponding to the query is normal data and stores the content data corresponding to the query in the non-volatile sub memory cache when the content data corresponding to the query is determined as the normal data.

4. The content providing system as claimed in claim 2 or 3, wherein the storage server is configured to delete the content data received from the external content provider and stored in the volatile main memory cache according to a predetermined period.

5. The content providing system as claimed in any one of claims 2 to 4, wherein the web server is configured to determine whether stored content data is normal data when the content data corresponding to the query is stored in the volatile main memory cache, to transmit the stored content to the user terminal when the stored content data is determined as normal data, and to transmit the stored content data corresponding to the query among the data stored in the non-volatile sub memory cache to the user terminal when the stored content data is determined as abnormal data.

6. The content providing system as claimed in any one of claims 2 to 5, wherein the management server is configured to parse received content data and to store the parsed content data in the volatile main memory cache, when the content data corresponding to the query is received from the external content provider.

7. The content providing system as claimed in any one of claims 2 to 6, wherein the web server is configured to transmit the content data stored in the volatile main memory cache to the user terminal through an open application programming interface (API).

8. A content providing method comprising:
receiving a query for requesting providing content from a user terminal;
determining whether content data corresponding to the query is stored in a storage server;
transmitting the query to a content provider when the content data corresponding to the query is not stored in the storage server;
receiving the content data corresponding to the query from the content provider; and
transmitting the received content data to the user terminal.

9. The content providing method as claimed in claim 8, further comprising:
wherein the storage server includes a volatile main memory cache and a non-volatile sub memory cache,
storing the content data corresponding to the query received from the content provider in the volatile main memory cache.

10. The content providing method as claimed in claim 9, wherein the storing includes:
determining whether the content data corresponding to the query is normal data; and
storing the content data corresponding to the query in the non-volatile sub memory cache when the content data corresponding to the query is the normal data.

11. The content providing method as claimed in claim 9 or 10, further comprising:
deleting the content data received from the content provider from the volatile main memory cache according to a predetermined period.

12. The content providing method as claimed in any one of claims 9 to 11, wherein the transmitting includes: determining whether stored content data is normal data when the content data corresponding to the query is stored in the volatile main memory cache; and
transmitting the stored content to the user terminal when the stored content data is the normal data and transmitting the stored content data corresponding to the query among the data stored in the non-volatile sub memory cache to the user terminal when the stored content data is abnormal data.

13. The content providing method as claimed in any one of claims 9 to 12, wherein in the storing, received content data is parsed and the parsed content data is stored in the volatile main memory cache, when the content data corresponding to the query is received from the content provider.

14. The content providing method as claimed in any one of claims 9 to 13, wherein in the transmitting, the content data stored in the volatile main memory cache is transmitted to the user terminal through an open API.
